# EUROPÄISCHE PATENTSCHRIFT

(11) **EP 4 115 738 B1**
(45) Veröffentlichungstag und Bekanntmachung des Hinweises auf die Patenterteilung: **23.10.2024**
(21) Anmeldenummer: 21184463.4
(22) Anmeldetag: 08.07.2021
(51) Int. Cl.: A21C 1/02, A21C 1/14

(54) **KNETMASCHINE MIT ZENTRALER ÖLBESPRÜHUNG, VERWENDUNG DER KNETMASCHINE UND VERFAHREN ZUM BESPRÜHEN EINES TRANSPORTBEHÄLTERS**
KNEADING MACHINE WITH CENTRE OIL SPRAYING, METHOD OF USING THE KNEADING MACHINE AND METHOD OF SPRAYING A TRANSPORTING CONTAINER
MACHINE DE PÉTRISSAGE À PULVÉRISATION CENTRALE D'HUILE, UTILISATION D'UNE MACHINE DE PÉTRISSAGE ET PROCÉDÉ DE PULVÉRISATION D'UN CONTENANT TRANSPORTEUR

(43) Veröffentlichungstag der Anmeldung: 11.01.2023
(73) Patentinhaber: DIOSNA Dierks & Söhne GmbH, 49086 Osnabrück (DE)
(72) Erfinder: BENSMANN, Stefan, 49078 Osnabrück (DE)
(74) Vertreter: Lenzing Gerber Stute

(56) Entgegenhaltungen:
- WO-A1-2018/162348
- WO-A2-2010/048487
- DE-A1- 19 621 286
- DE-U1- 29 603 141

## Beschreibung

Die vorliegende Erfindung betrifft eine Knetmaschine für Teige mit den Merkmalen des Oberbegriffs des Anspruchs 1, ein Verfahren zum Besprühen eines Transportbehälters einer Knetmaschine mit Öl sowie eine Verwendung einer Knetmaschine zur Herstellung von Nahrungsmittelteigen.

Knetmaschinen für Teige, insbesondere Backteige, weisen einen Knetbottich unterschiedlicher Größe für Teigmassen von 100 bis 1000 Kg auf, in den jeweils ein motorisch antreibbares Knetwerkzeug zur Durchführung des Knetvorganges einbringbar ist. Im Betrieb ist der Knetbottich von einem Deckel verschlossen. Nach Beendigung des Knetvorganges wird das Werkzeug herausgefahren. Es sind Knetmaschinen mit Mittenentleerungsvorrichtungen im Boden bekannt. Ist der Knetvorgang abgeschlossen, wird der Teig durch diese Mittenentleerungsvorrichtung nach unten ausgegeben und kann mithilfe eines Transportsystems an beispielsweise einen Linienportionierer weitergegeben werden. Das Transportsystem umfasst einen Transportbehälter in den der Nahrungsmittelteig durch die Öffnung im Knetbottich gelangt.

Der Transportbehälter kann eine runde oder rechteckige Grundfläche haben. Transportbehälter mit rechteckigen Grundflächen sind deutlich kostengünstiger als Transportbehälter mit runder Grundfläche. Sie haben aber den Nachteil, dass in dem Transportbehälter vorhandener Teig nicht einfach austragbar ist. Bei runden Transportbehältern werden Ausschälvorrichtungen eingesetzt, um den Teig mit einem Ausschäler vom Rand, bei sich drehendem Transportbehälter abzulösen. Bei rechteckigen Transportbehältern kommt Öl zum Einsatz, welches vor dem Eintrag des Nahrungsmittelteigs auf die Wände geschmiert wird und somit ein Ankleben des Teiges an dem Transportbehälter verhindert. Herkömmlicherweise wird das Öl von Hand von einem Bediener oder mittels an einem Deckel außerhalb des Behälters angeordneter Düsen in den Transportbehälter eingebracht. Beide Methoden sind unzuverlässig, da das Auftragen von Öl nicht gleichmäßig und/oder mit der benötigten Prozesssicherheit erfolgt.

Aus der Offenlegungsschrift WO 2018/162348 A1 ist eine Mischvorrichtung mit Mittenentleerungsvorrichtung und einer Reinigungsdüse zur Reinigung der Verschlussöffnung für den Einsatz als Betonmischer bekannt.

DE 196 21 286 A1 offenbart eine Knetmaschine gemäß dem Oberbegriff des Anspruchs 1, und die Verwendung einer Knetmaschine gemäß dem Oberbegriff des Anspruchs 15. WO 2010/048487 A2 offenbart ein Verfahren gemäß dem Oberbegriff des Anspruchs 11.

Es ist Aufgabe der vorliegenden Erfindung eine Knetmaschine anzugeben, die ein optimales Auftragen von Öl auf die Transportbehälterinnenseite sicherstellt.

Diese Aufgabe wird von einer Knetmaschine für Teige mit den Merkmalen des Anspruchs 1, von einem Verfahren zum Besprühen eines Transportbehälters einer Knetmaschine mit Öl mit den Merkmalen des Anspruchs 11 und von einer Verwendung einer Knetmaschine zur Herstellung von Nahrungsmittelteigen mit den Merkmalen des Anspruchs 15 gelöst.

Demnach ist eine Knetmaschine für Nahrungsmittelteige aufweisend einen drehbaren Knetbottich, der in einem Boden eine zentrale Öffnung zum Austrag des Nahrungsmittelteiges hat, vorgesehen. Die Knetmaschine hat eine Mittenentleerungsvorrichtung, die derart eingerichtet ist, die Öffnung in einer Betriebsstellung mittels eines bewegbaren Verschlusskörpers zu verschließen und in einer Austragsstellung die Öffnung zum Austrag des Nahrungsmittelteigs zumindest teilweise freizugeben. Unterhalb der Öffnung und in Draufsicht im Bereich der Öffnung ist eine Ölsprühvorrichtung angeordnet (erste Position), die aus dem Bereich der Öffnung zumindest teilweise heraus bewegbar ist (in eine zweite Position). In anderen Worten ist die Ölsprühvorrichtung durch die Öffnung sichtbar und wird von dieser in der ersten Position verdeckt. Dadurch, dass die Ölsprühvorrichtung bewegbar ist, kann sie im Bereich der Öffnung angeordnet sein und erlaubt eine gleichmäßige Besprühung eines unterhalb der Öffnung befindlichen Transportbehälters. In der zweiten Position befindet sich die Ölsprühvorrichtung außerhalb des Teigflusses. Es ist vorteilhaft, wenn die Ölsprühvorrichtung in der ersten Position in der Mitte der Öffnung liegt.

Vorzugsweise weist die Ölsprühvorrichtung mehr als eine Fächerstrahldüse, insbesondere mehr als eine in ihrer Richtung einstellbare Fächerstrahldüse auf.

In einer vorteilhaften Ausführungsform ist die Ölsprühvorrichtung an der Mittenentleerungsvorrichtung angebracht und mit dem Verschlusskörper bewegbar. Eine zusätzliche Mechanik für den Verfahrprozess der Ölsprühvorrichtung kann dadurch eingespart werden. Vorzugsweise weist die Mittenentleerungsvorrichtung einen translatorisch verfahrbaren, schwenkbaren oder kippbaren Tragarm auf, an dessen einem Ende der Verschlusskörper und die Ölsprühvorrichtung befestigt sind.

Damit der Boden eines Transportbehälters gleichmäßig besprüht werden kann, ist es vorteilhaft, wenn die Ölsprühvorrichtung eine Vollkegeldüse umfasst, die nach unten, von der Öffnung wegzeigend ausgerichtet ist.

Vorzugsweise umfasst die Knetmaschine den beweglichen Transportbehälter, der unterhalb des Knetbottichs einbringbar ist und der eine Innenwand aufweist, wobei die Ölsprühvorrichtung dazu eingerichtet ist, die Innenwand gleichmäßig mit Öl zu besprühen. In einer Ausführungsform weist der Transportbehälter eine rechteckige Grundfläche auf, wobei jeder Seitenwand eine Fächerstrahldüse zugeordnet ist, die einen Fächerwinkel und eine Orientierung aufweist, so dass die Seitenwand über die gesamte Breite mit einem linienförmigen Auftreffbereich parallel zum Boden besprühbar ist. Der Transportbehälter kann aber auch einen kreisförmigen Boden haben.

Bei einer Knetmaschine mit Mittenentleerungsvorrichtung ist es ganz allgemein von Vorteil, wenn diese einen magnetischen Nährungsschalter aufweist, der die Lage und das Vorhandensein eines Transportbehälters in einer Endposition abfragt.

Zusätzlich ist es von Vorteil, wenn die Knetmaschine eine Verriegelungsvorrichtung aufweist, die sich in Einschubrichtung hinter dem Transportbehälter befindet und die verhindert, dass der Transportbehälter aus der Knetmaschine entnommen werden kann oder herausrollt.

Weiterhin ist ein Verfahren zum Besprühen eines Transportbehälters einer Knetmaschine mit Öl, wobei die Knetmaschine eine Mittenentleerungsvorrichtung aufweist, vorgesehen. Das Verfahren umfasst die folgenden Schritte:
a) Einbringen des Transportbehälters unterhalb eines Knetbottichs der Knetmaschine in eine Endposition,
b) Zumindest teilweises Besprühen der Innenseite des Transportbehälters mittels einer Ölsprühvorrichtung, die oberhalb und in Draufsicht im Bereich des Transportbehälters angeordnet ist, bevorzugt mittig des Transportbehälters,
c) Verfahren der Ölsprühvorrichtung aus dem Bereich des Teigflusses aus einer Öffnung im Boden des Knetbottiches heraus,
d) Verfahren eines Verschlusskörpers der Mittenentleerungsvorrichtung von einer Betriebsstellung, in der der Verschlusskörper eine Öffnung im Boden des Knetbottichs verschließt, in eine Austragsstellung, in der die Öffnung zum Austrag des Nahrungsmittelteigs zumindest teilweise freigegeben ist, so dass der Nahrungsmittelteig in den Transportbehälter fällt.

Dadurch, dass die Ölsprühvorrichtung in Draufsicht innerhalb des Transportbehälters liegen kann, ist ein gleichmäßiges Auftragen von Öl auf der Innenseite des Transportbehälters möglich. Bevor der Nahrungsmittelteig in den Transportbehälter ausgegeben wird, wird die Ölsprühvorrichtung bewegt, damit diese den Teigaustrag nicht behindert. Unter der Innenseite werden die Innenseiten der Wände und die Innenseite des Bodens des Transportbehälters verstanden.

In einer bevorzugten Ausführungsform ist die Ölsprühvorrichtung an der Mittenentleerungsvorrichtung befestigt und wird in Schritt d) beim Verfahren des Verschlusskörpers in die Austragsstellung außerhalb des Bereichs des Transportbehälters gebracht.

Vorzugsweise umfasst der Knetbottich einen magnetischen Nährungsschalter, wie oben beschrieben, wobei nach Schritt a) folgender Verfahrensschritt vorgesehen ist:
- Abfragen mittels des magnetischen Nährungsschalters ob ein Transportbehälter in der Endposition steht, wobei die Schritte b), c) und d) nur ausgeführt werden, wenn ein Transportbehälter in der Endposition detektiert wurde.

Bevorzugt wird in Schritt a) der Transportbehälter von Hand in die Endposition geschoben und nach dem Einnehmen der Endposition wird die Lage des Transportbehälters mittels einer Verriegelungsvorrichtung fixiert.

Die definierte Lage erlaubt es, das Öl prozesssicher auf die Innenseite des Transportbehälters aufzubringen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung einer Knetmaschine mit Knetbottich und darunter angeordnetem Transportbehälter,
- Figur 2:: eine räumliche Ansicht der Knetmaschine der Figur 1 ohne Transportbehälter,
- Figur 3:: eine Ansicht von unten auf den Knetbottich der Figur 1,
- Figur 4:: einen Längsschnitt durch den unterhalb der Knetmaschine platzierten Transportbehälter, sowie
- Figur 5:: einen Längsschnitt durch den unterhalb der Knetmaschine platzierten Transportbehälter im geöffneten Zustand der Mittenentleerungsvorrichtung.

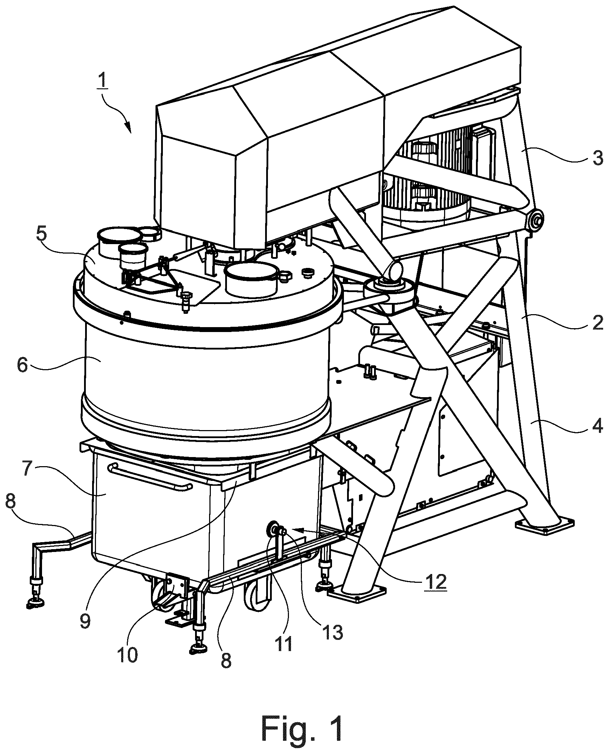

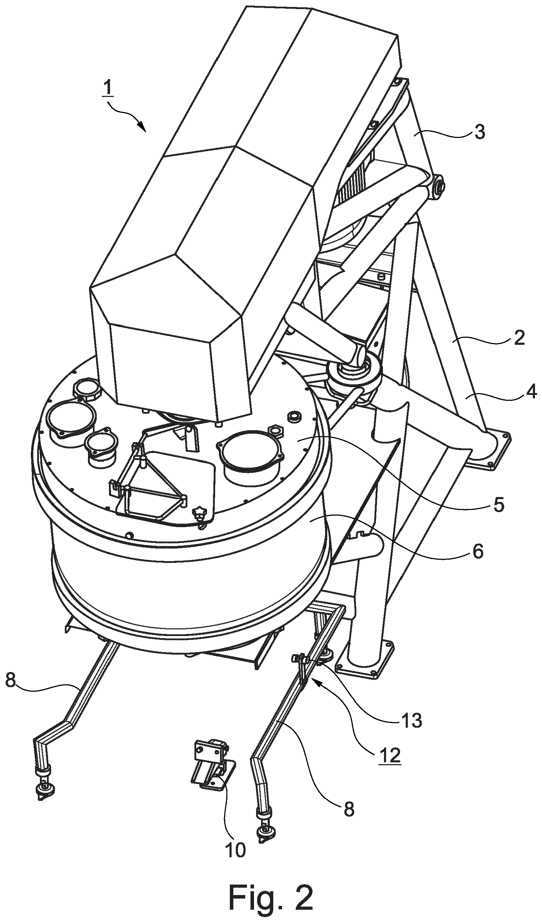

Die Figuren 1 und 2 zeigen eine Knetmaschine 1 zur Verarbeitung eines Nahrungsmittelteigs, insbesondere eines Backteigs. Die Knetmaschine 1 weist ein Knetmaschinengestell 2 auf, dessen Kopfteil 3 um eine nicht dargestellte Schwenkachse zwischen einer unteren Betriebsstellung und einer oberen Reinigungsstellung gegenüber einem Unterteil 4 verschwenkbar ist. Das Kopfteil 3 trägt das nicht dargestellte Knetwerkzeug und den für eine Rotation des Knetwerkzeugs benötigten nicht dargestellten Antrieb, sowie einen Deckel 5, der zum Abdecken des nach oben hin offenen Knetbottichs 6 vorgesehen ist. Im Unterteil 4 der Knetmaschine 1 sind der Knetbottich 6 und ein nicht dargestellter Elektromotor angeordnet. Der Elektromotor dreht den Knetbottich 6 um eine Rotationsachse gegenüber dem Knetmaschinengestell 2. Der Knetbottich 6 weist eine nicht dargestellte Mittenentleerungsvorrichtung auf, durch die der Nahrungsmittelteig in einen unterhalb des Knetbottichs 6 angeordneten Transportbehälter 7 gelangt. Der Transportbehälter 7 weist eine rechteckige Grundfläche auf. Er wird unter den Knetbottich 6 beispielsweise von Hand geschoben. Damit die Platzierung exakt erfolgt und der Schutz des Bedieners sichergestellt ist, wird das Einschieben des Transportbehälters 7 im unteren Bereich von zwei in Einschubrichtung parallel und somit seitlich angeordneten Führungsstreben 8 geführt. Auf Höhe eines oberen Randes des Transportbehälters 7 ist zusätzlich eine abgekantete Abdeckung 9 vorgesehen, die den Transportbehälter 7 beim Einschieben ebenfalls seitlich führt. Steht der Transportbehälter 7 in seiner Endposition unterhalb des Knetbottichs 6 wird die Lage mittels einer Verriegelungsvorrichtung 10 fixiert. Die Verriegelungsvorrichtung 10 befindet sich in Einschubrichtung hinter dem Transportbehälter 7 und verhindert, dass der Transportbehälter 7 aus der Knetmaschine 1 entnommen werden kann. Seitlich an dem Transportbehälter 7 ist ein Magnet 11 befestigt, der Teil eines magnetischen Näherungsschalters 12 ist. In der finalen Position detektiert ein Reedschalter 13 des Näherungsschalters das Vorhandsein des Magneten 11. Die Sicherheitskategorie des Näherungsschalters 12 ist drei, damit Personenschutz gewährleistet werden kann. Zwischen Magnet 11 und Reedschalter 13 sind in der Endposition des Transportbehälters 7 in der Knetmaschine 1 etwa 5 mm Abstand vorgesehen. Der Näherungsschalter 12 erlaubt es, die Lage und das Vorhandensein des Transportbehälters 7 zu verifizieren. Aus sicherheitstechnischen Gründen kann, nur wenn der Transportbehälter 7 erkannt wurde, die Mittenentleerungsvorrichtung eine Öffnung im Boden des Knetbottichs freigeben.

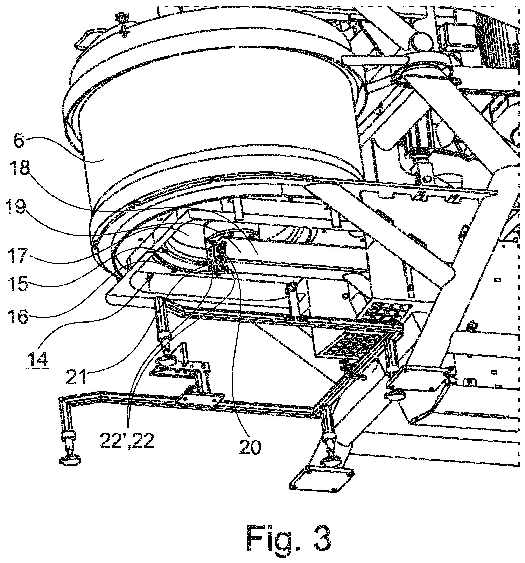

In der Figur 3 ist die Mittenentleerungsvorrichtung 14 dargestellt. Im Boden 15 des Knetbottichs 6 ist eine Öffnung 16 vorgesehen, die durch einen Verschlussmechanismus der Mittenentleerungsvorrichtung 14 verschließbar ist. Die Mittenentleerungsvorrichtung 14 weist einen verfahrbaren Verschlusskörper 17 auf, der an die Öffnung 16 im Knetbottich 6 angepasst ist und im Wesentlichen tellerförmig ausgebildet ist. Die Öffnung 16 des Knetbottichs 6 wird von dem Verschlusskörper 17 in der dargestellten Verschlussstellung dicht verschlossen, so dass kein Teig aus der Bodenöffnung 16 austreten kann. Die Mittenentleerungsvorrichtung 14 umfasst weiterhin einen nicht dargestellten Elektromotor, der den Verschlusskörper 17 von der Verschlussstellung in eine Austragsstellung und vice versa entlang einer Verfahrrichtung verfährt. Die Verfahrrichtung entspricht der Einschubrichtung des Transportbehälters in die Knetmaschine.

Der Verschlusskörper 17 ist an einem Tragarm 18 in einem ersten Endbereich 19 auf der Oberseite montiert. Der Tragarm 18 wird von dem Elektromotor translatorisch verfahren. An der Stirnseite des ersten Endes des Tragarms 20 ist eine Ölsprühvorrichtung 21 angeordnet. Die Ölsprühvorrichtung 21 wird von dem Verschlusskörper 17 verdeckt. Die Ölsprühvorrichtung 21 weist insgesamt fünf Düsen 22 (vier Fächerstrahldüsen 22' und eine Vollkegeldüse) auf. In dem Tragarm 18 ist eine nicht dargestellte Zuleitung angeordnet, die mit den Düsen 22 verbunden ist. Den Düsen 22 wird mittels einer Pumpe Öl zugeführt. Die Düsen 22 weisen ein Rückschlagventil auf, dass ein kurzzeitiges Austreten von Öl aus den Düsen 22 ermöglicht.

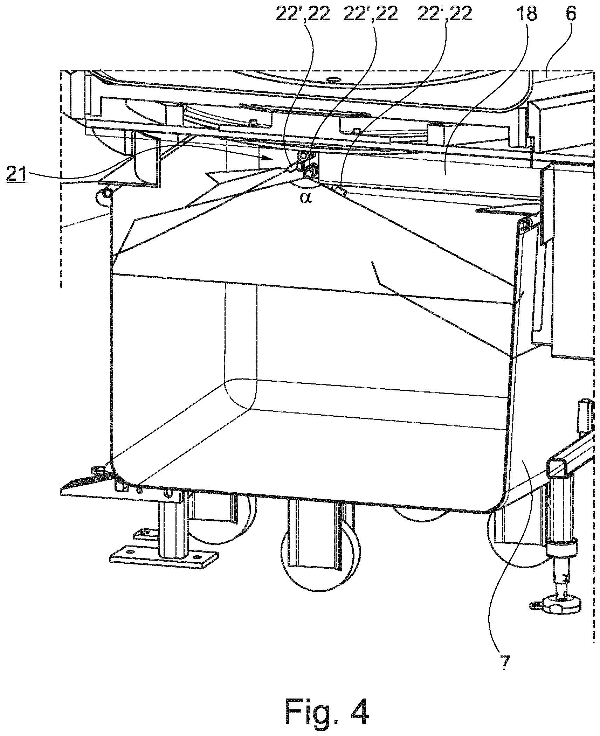

Figur 4 zeigt im Detail den Transportbehälter 7 und die Ölsprühvorrichtung 21. Die Fächerstrahldüsen 22' erzeugen einen fächerförmigen Ölstrahl in einer Ebene. Jeder Wand der vier Seitenwände des Transportbehälters ist eine Fächerstrahldüse 22' zugeordnet. Die Auffächerung bzw. der Fächerwinkel α ist dabei jeweils so groß gewählt, dass sich der Strahl über die gesamte Breite der entsprechenden Seitenwand erstreckt. Der Fächerwinkel kann durch Wahl der Fächerstrahldüse gewählt werden. Der Auftreffwinkel kann über ein Gelenk an der Düse in der Höhe aber auch seitlich eingestellt werden. Die Düsen sind daher in der Richtung verstellbar. Die Ausrichtung der Fächerstrahldüsen 22' ist bevorzugt so gewählt, dass der linienförmige Auftreffbereich etwa parallel zum Boden des Transportbehälters verläuft und im oberen Bereich des Transportbehälters liegt, so dass das Öl von dort nach unten Richtung Boden an der Innenwand herunterlaufen kann. Damit sich der Teig gut von der Innenwand lösen lässt, muss der Auftreffbereich oberhalb der maximalen Füllhöhe liegen. Die verstellbaren Fächerstrahldüsen 22' können auf die entsprechenden Bedürfnisse und Transportbehälter eingestellt werden. Neben den Fächerstrahldüsen 22' ist eine nicht dargestellte Vollkegeldüse angeordnet, die nach unten Richtung Boden des Transportbehälters ausgerichtet ist. Die Vollkegeldüse weist einen kreisförmigen Ölstrahl auf, der auf die Größe des Bodens des Transportbehälters angepasst ist und auf diesen gleichmäßig verteilt Öl aufbringt. Durch die Anordnung der Ölsprühvorrichtung 21 im Bereich des Transportbehälters 7, bevorzugt zentral unterhalb des Knetbottichs 6 und damit einhergehend mittig, oberhalb des Transportbehälters 7 reicht eine geringe Anzahl an Düsen 22 aus, um die Innenseite des Transportbehälters gleichmäßig und kostengünstig mit Öl zu besprühen. Die Anordnung der Ölsprühvorrichtung 21 am Tragarm 18 der Mittenentleerungsvorrichtung ist dabei besonders vorteilhaft, da auf bereits bestehende mechanische Strukturen zurückgegriffen werden kann und keine zusätzliche verfahrbare Mechanik geschaffen werden muss. Der Besprühvorgang startet kurz bevor die Mittenentleerungsvorrichtung in die Austragsstellung überführt wird und der Nahrungsmittelteig in den Transportbehälter fällt. Da die Lage des Transportbehälters 7 durch die Lagekontrolle mittels des Näherungsschalters exakt definiert ist, können die Düsen 22 ganz gezielt die Innenseite des Transportbehälters mit Öl besprühen. Es ergibt sich dadurch eine sehr hohe Prozesssicherheit. Die Fächerwinkel α sind bevorzugt derart gewählt, dass die fächerförmigen Ölstrahle bzw. die Auftreffbereiche der in Umfangsrichtung unmittelbar benachbarten Düsen 22 wenigstens zu einem kleinen Grad überlappen. Wie aus der Figur 4 ersichtlich ist, liegt in dem dargestellten Ausführungsbeispiel der rechte Fächerstrahl in vertikaler Richtung deutlich niedriger als die übrigen Fächerstrahlen. Dies ist für dieses konkrete Ausführungsbeispiel notwendig, da der Transportbottich 7 an dieser Seite, der in Einschubrichtung liegenden Vorderseite, einen kundenspezifischen Ausschnitt aufweist, der die Füllhöhe des Transportbehälters an dieser Seite begrenzt. Für andere Transportbehälter ist es von Vorteil, wenn die Auftreffbereiche der vier Fächerstrahldüsen auf einer gemeinsamen Höhe in vertikaler Richtung und somit in einer gemeinsamen Ebene parallel zum Boden liegen.

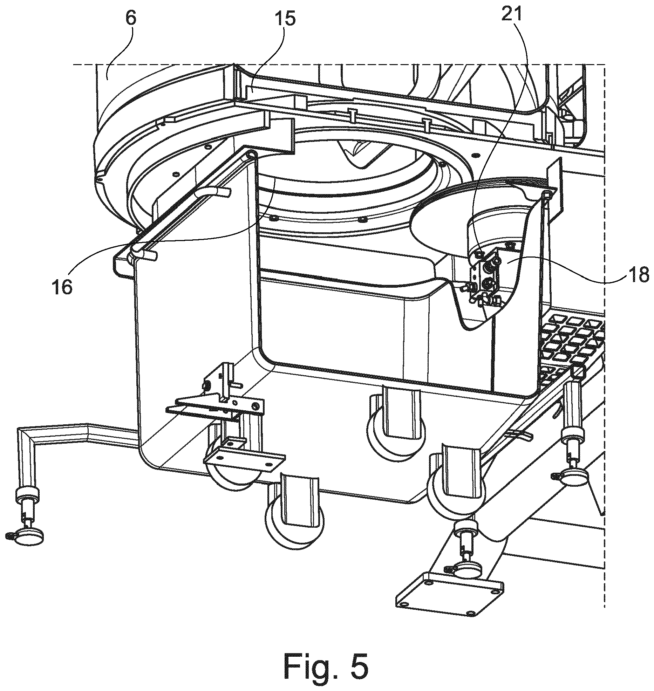

In der in Figur 5 dargestellten Austragsstellung ist die Öffnung 16 im Boden 15 des Knetbottichs 6 vollständig freigegeben. Der Tragarm 18 und mit ihm die Ölbesprühvorrichtung 21 wurden zurückgefahren.

## Patentansprüche

1. Knetmaschine (1) für Nahrungsmittelteige aufweisend einen drehbaren Knetbottich (6), der in einem Boden (15) eine zentrale Öffnung (16) zum Austrag des Nahrungsmittelteiges hat, und eine Mittenentleerungsvorrichtung (14), die derart eingerichtet ist, die Öffnung (16) in einer Betriebsstellung mittels eines bewegbaren Verschlusskörpers (17) zu verschließen und in einer Austragsstellung die Öffnung (16) zum Austrag des Nahrungsmittelteigs zumindest teilweise freizugeben, **dadurch gekennzeichnet, dass** unterhalb und in Draufsicht im Bereich der Öffnung (16) eine Ölsprühvorrichtung (21) angeordnet ist, die aus dem Bereich der Öffnung (16) zumindest teilweise heraus bewegbar ist.

2. Knetmaschine nach Anspruch 1, **dadurch gekennzeichnet, dass** die Ölsprühvorrichtung (21) mehr als eine Fächerstrahldüse (22') umfasst.

3. Knetmaschine nach Anspruch 1 oder 2, **dadurch gekennzeichnet, dass** die Ölsprühvorrichtung (21) an der Mittenentleerungsvorrichtung (14) angebracht ist und mit dem Verschlusskörper (17) bewegbar ist.

4. Knetmaschine nach Anspruch 3, **dadurch gekennzeichnet, dass** die Mittenentleerungsvorrichtung (14) einen translatorisch verfahrbaren, schwenkbaren oder kippbaren Tragarm (18) umfasst, an dessen einem Ende der Verschlusskörper (17) und die Ölsprühvorrichtung (21) befestigt sind.

5. Knetmaschine nach einem der vorhergehenden Ansprüche, **dadurch gekennzeichnet, dass** die Ölsprühvorrichtung (21) eine Vollkegeldüse umfasst, die nach unten, von der Öffnung (16) wegzeigend ausgerichtet ist.

6. Knetmaschine nach einem der vorhergehenden Ansprüche, **dadurch gekennzeichnet, dass** die Knetmaschine (1) einen beweglichen Transportbehälter (7) aufweist, der unterhalb des Knetbottichs (6) einbringbar ist und der eine Innenwand aufweist, wobei die Ölsprühvorrichtung (21) dazu eingerichtet ist, die Innenwand gleichmäßig mit Öl zu besprühen.

7. Knetmaschine nach Anspruch 6, **dadurch gekennzeichnet, dass** der Transportbehälter (7) eine rechteckige Grundfläche aufweist und jeder Seitenwand eine Fächerstrahldüse (21') zugeordnet ist, die einen Fächerwinkel und eine Orientierung derart aufweist, dass die Seitenwand über die gesamte Breite mit einem linienförmigen Auftreffbereich parallel zum Boden des Knetbottichs (15) besprühbar ist.

8. Knetmaschine nach Anspruch 6 oder 7, **dadurch gekennzeichnet, dass** die Knetmaschine (1) einen magnetischen Nährungsschalter (12) aufweist, der die Lage und das Vorhandensein des Transportbehälters (7) in einer Endposition abfragt.

9. Knetmaschine nach einem der Ansprüche 6 bis 8, **dadurch gekennzeichnet, dass** die Knetmaschine (1) eine Verriegelungsvorrichtung (10) aufweist, die sich in Einschubrichtung hinter dem Transportbehälter (7) befindet und die verhindert, dass der Transportbehälter (7) aus der Knetmaschine (1) entnommen werden kann.

10. Knetmaschine nach einem der Ansprüche 2 bis 9, **dadurch gekennzeichnet, dass** die Fächerstrahldüsen in ihrer Richtung verstellbar sind.

11. Verfahren zum Besprühen eines Transportbehälters (7) einer Knetmaschine (1) mit Öl, wobei das Verfahren folgende Schritte umfasst:
a) Einbringen des Transportbehälters (7) unterhalb eines Knetbottichs (6) der Knetmaschine in eine Endposition,
b) Zumindest teilweises Besprühen der Innenseite des Transportbehälters mittels einer Ölsprühvorrichtung (21), die oberhalb und in Draufsicht im Bereich des Transportbehälters (7) angeordnet ist,
**dadurch gekennzeichnet, dass** die Knetmaschine eine Mittenentleerungsvorrichtung (14) aufweist, die eine Betriebsstellung, in der der Verschlusskörper (17) eine Öffnung (16) in einem Boden des Knetbottichs (15) verschließt, und eine Austragsstellung, in der die Öffnung (16) zum Austrag des Nahrungsmittelteigs zumindest teilweise freigegeben ist, umfasst, und dass, das Verfahren folgende Schritte umfasst:
c) Verfahren der Ölsprühvorrichtung (21) aus dem Bereich des Teigflusses aus der Öffnung (16) heraus,
d) Bewegen eines Verschlusskörpers (17) der Mittenentleerungsvorrichtung (14) von der Betriebsstellung in die Austragsstellung, in der die Öffnung (16) zum Austrag des Nahrungsmittelteigs zumindest teilweise freigegeben ist, so dass der Nahrungsmittelteig in den Transportbehälter (7) entleert wird.

12. Verfahren nach Anspruch 10, **dadurch gekennzeichnet, dass** die Ölsprühvorrichtung (21) an der Mittenentleerungsvorrichtung (14) befestigt ist und in Schritt d) beim Bewegen des Verschlusskörpers (17) in die Austragsstellung mitbewegt wird.

13. Verfahren nach Anspruch 10 oder 11, **dadurch gekennzeichnet, dass** der Knetbottich (6) einen magnetischen Nährungsschalter (12) umfasst, wobei nach Schritt a) folgender Verfahrensschritt vorgesehen ist:
- Abfragen mittels des magnetischen Nährungsschalters (12) ob ein Transportbehälter (7) in der Endposition steht, wobei die Schritte b), c) und d) nur ausgeführt werden, wenn ein Transportbehälter (7) in der Endposition detektiert wurde.

14. Verfahren nach einem der vorhergehenden Ansprüche 10 bis 12,
**dadurch gekennzeichnet, dass** in Schritt a) der Transportbehälter (7) von Hand in die Endposition geschoben wird und dass nach dem Einnehmen der Endposition die Lage des Transportbehälters (7) mittels einer Verriegelungsvorrichtung (10) fixiert wird.

15. Verwendung einer Knetmaschine (1) zur Herstellung von Nahrungsmittelteigen aufweisend einen drehbaren Knetbottich (6), der in einem Boden (15) eine zentrale Öffnung (16) zum Austrag des Nahrungsmittelteiges hat, und eine Mittenentleerungsvorrichtung (14), die derart eingerichtet ist, die Öffnung (16) in einer Betriebsstellung mittels eines bewegbaren Verschlusskörpers (17) zu verschließen und in einer Austragsstellung die Öffnung (16) zum Austrag des Nahrungsmittelteigs zumindest teilweise freizugeben, **dadurch gekennzeichnet, dass** unterhalb und in Draufsicht im Bereich der Öffnung (16) eine Ölsprühvorrichtung (21) angeordnet ist, die aus dem Bereich der Öffnung (16) zumindest teilweise heraus bewegbar ist.

## Claims

1. Kneading machine (1) for food doughs, comprising a rotatable kneading bowl (6) which has a central opening (16) in a base (15) for discharging the food dough, and a central emptying device (14) which is arranged such that to close the opening (16) in an operating position by means of a movable closure body (17) and to at least partially open the opening (16) for discharging the food dough in a discharge position, **characterized in that** an oil spraying device (21) is arranged below and in plan view in the region of the opening (16), which can be moved at least partially out of the region of the opening (16).

2. Kneading machine according to claim 1, **characterized in that** the oil spraying device (21) comprises more than one fan jet nozzle (22').

3. Kneading machine according to claim 1 or 2, **characterized in that** the oil spraying device (21) is attached to the central emptying device (14) and is movable with the closure body (17).

4. Kneading machine according to claim 3, **characterized in that** the central emptying device (14) comprises a translationally movable, pivotable or tiltable support arm (18), to one end of which the closure body (17) and the oil spraying device (21) are fastened.

5. Kneading machine according to one of the preceding claims, **characterized in that** the oil spraying device (21) comprises a full cone nozzle which is directed downwards, pointing away from the opening (16).

6. Kneading machine according to one of the preceding claims,
**characterized in that** the kneading machine (1) has a movable transport container (7) which can be inserted below the kneading bowl (6) and which has an inner wall, the oil spraying device (21) being set up to spray the inner wall uniformly with oil.

7. Kneading machine according to claim 6, **characterized in that** the transport container (7) has a rectangular base surface and each side wall is assigned a fan jet nozzle (21') which has a fan angle and an orientation such that the side wall can be sprayed over the entire width with a line-shaped impact area parallel to the base of the kneading bowl (15).

8. Kneading machine according to claim 6 or 7, **characterized in that** the kneading machine (1) has a magnetic proximity switch (12) which senses the position and presence of the transport container (7) in an end position.

9. Kneading machine according to one of claims 6 to 8, **characterized in that** the kneading machine (1) has a locking device (10) which is located behind the transport container (7) in the direction of insertion and which prevents the transport container (7) from being removed from the kneading machine (1).

10. Kneading machine according to one of claims 2 to 9, **characterized in that** the fan jet nozzles are adjustable in their direction.

11. A method of spraying a transport container (7) of a kneading machine (1) with oil, the method comprising the following steps:
a) Placing the transport container (7) underneath a kneading bowl (6) of the kneading machine in an end position,
b) At least partial spraying of the inside of the transport container by means of an oil spraying device (21) which is arranged above and in plan view in the region of the transport container (7), **characterized in that** the kneading machine has a central emptying device (14), which comprises an operating position, in which the closure body (17) closes an opening (16) in a base of the kneading bowl (15), and a discharge position, in which the opening (16) for discharging the food dough is at least partially open, and **in that** the method comprises the following steps :
c) Moving the oil spraying device (21) out of the area of the dough flow out of the opening (16),
d) Moving a closure body (17) of the central emptying device (14) from the operating position into the discharge position, in which the opening (16) for discharging the food dough is at least partially open, so that the food dough is emptied into the transport container (7).

12. Method according to claim 10, **characterized in that** the oil spraying device (21) is attached to the central emptying device (14) and is also moved in step d) when the closure body (17) is moved into the discharge position.

13. Method according to claim 10 or 11, **characterized in that** the kneading bowl (6) comprises a magnetic proximity switch (12), the following method step being provided after step a):
- Querying by means of the magnetic proximity switch (12) whether a transport container (7) is in the end position, wherein steps b), c) and d) are only carried out if a transport container (7) has been detected in the end position.

14. Method according to one of the preceding claims 10 to 12,
**characterized in that** in step a) the transport container (7) is pushed into the end position by hand and **in that** after reaching the end position, the position of the transport container (7) is fixed by means of a locking device (10).

15. Use of a kneading machine (1) for producing food dough, comprising a rotatable kneading bowl (6) which has a central opening (16) in a base (15) for discharging the food dough, and a central emptying device (14) which is arranged such that to close the opening (16) in an operating position by means of a movable closure body (17) and to at least partially open the opening (16) for discharging the food dough in a discharge position, **characterized in that** an oil spraying device (21) is arranged below and in plan view in the region of the opening (16), which can be moved at least partially out of the region of the opening (16).

## Revendications

1. Pétrisseuse (1) destinée à des pâtes pour produits alimentaires, comprenant une cuve rotative de pétrissage (6) munie, dans un fond (15), d'un orifice central (16) affecté à l'évacuation de la pâte pour produits alimentaires, et un
dispositif central de vidage (14) agencé de façon à occulter l'orifice (16) dans une position de fonctionnement, au moyen d'un corps obturateur mobile (17), et à dégager au moins partiellement ledit orifice (16) dans une position d'évacuation, en vue d'évacuer ladite pâte pour produits alimentaires, **caractérisée par le fait qu'**un dispositif (21) de pulvérisation d'huile, occupant un emplacement sous-jacent à l'orifice (16) et dans la région de ce dernier en vue de dessus, peut être mû au moins partiellement hors de ladite région dudit orifice (16).

2. Pétrisseuse selon la revendication 1, **caractérisée par le fait que** le dispositif (21) de pulvérisation d'huile inclut plus d'une buse (22') de diffusion en éventail.

3. Pétrisseuse selon la revendication 1 ou 2, **caractérisée par le fait que** le dispositif (21) de pulvérisation d'huile est implanté sur le dispositif central de vidage (14) et peut être mû avec le corps obturateur (17).

4. Pétrisseuse selon la revendication 3, **caractérisée par le fait que** le dispositif central de vidage (14) inclut un bras de support (18) déplaçable en translation, apte à pivoter ou à basculer, à l'une des extrémités duquel le corps obturateur (17) et le dispositif (21) de pulvérisation d'huile sont fixés.

5. Pétrisseuse selon l'une des revendications précédentes, **caractérisée par le fait que** le dispositif (21) de pulvérisation d'huile inclut une buse à cône massif, orientée vers le bas et pointant à l'écart de l'orifice (16).

6. Pétrisseuse selon l'une des revendications précédentes, **caractérisée par le fait que** ladite pétrisseuse (1) est dotée d'un récipient mobile de transport (7) qui peut être intégré au-dessous de la cuve de pétrissage (6) et comporte une paroi intérieure, le dispositif (21) de pulvérisation d'huile étant agencé pour pulvériser uniformément de l'huile sur ladite paroi intérieure.

7. Pétrisseuse selon la revendication 6, **caractérisée par le fait que** le récipient de transport (7) est pourvu d'une surface de base rectangulaire, une buse (21') de diffusion en éventail, associée à chaque paroi latérale, présentant un angle de dispersion en éventail et une orientation tels que ladite paroi latérale puisse être pulvérisée par une zone linéaire d'impact, sur toute la largeur, parallèlement au fond de la cuve de pétrissage (15).

8. Pétrisseuse selon la revendication 6 ou 7, **caractérisée par le fait que** ladite pétrisseuse (1) est nantie d'un détecteur magnétique de proximité (12) interrogeant la position et la présence du récipient de transport (7) en un emplacement extrême.

9. Pétrisseuse selon l'une des revendications 6 à 8, **caractérisée par le fait que** ladite pétrisseuse (1) est équipée d'un dispositif de verrouillage (10) qui se trouve derrière le récipient de transport (7), dans la direction d'insertion, et qui empêche ledit récipient de transport (7) d'être retiré de ladite pétrisseuse (1).

10. Pétrisseuse selon l'une des revendications 2 à 9, **caractérisée par le fait que** la direction des buses de diffusion en éventail peut être réglée.

11. Procédé de pulvérisation d'huile sur un récipient de transport (7) d'une pétrisseuse (1),
ledit procédé incluant les étapes suivantes :
a) introduction du récipient de transport (7) au-dessous d'une cuve de pétrissage (6) de la pétrisseuse, vers un emplacement extrême,
b) pulvérisation au moins partielle de la face interne dudit récipient de transport au moyen d'un dispositif (21) de pulvérisation d'huile occupant un emplacement sus-jacent, en vue de dessus dans la région dudit récipient de transport (7),
**caractérisé par le fait que** la pétrisseuse (1) est pourvue d'un dispositif central de vidage (14) comprenant une position de fonctionnement, dans laquelle le corps obturateur (17) occulte un orifice (16) pratiqué dans un fond de la cuve de pétrissage (15), et une position d'évacuation dans laquelle ledit orifice (16) est au moins partiellement dégagé en vue d'évacuer la pâte pour produits alimentaires ; et **par le fait que** ledit procédé inclut les étapes suivantes :
c) déplacement du dispositif (21) de pulvérisation d'huile hors de la zone du flux de pâte sortant de l'orifice (16),
d) mouvement imprimé à un corps obturateur (17) du dispositif central de vidage (14), de la position de fonctionnement à la position d'évacuation dans laquelle ledit orifice (16) est au moins partiellement dégagé en vue d'évacuer la pâte pour produits alimentaires, de telle sorte que ladite pâte pour produits alimentaires soit vidée dans le récipient de transport (7).

12. Procédé selon la revendication 10, **caractérisé par le fait que** le dispositif (21) de pulvérisation d'huile est fixé au dispositif central de vidage (14) et est mû conjointement, à l'étape d), lors du mouvement imprimé au corps obturateur (17) vers la position d'évacuation.

13. Procédé selon la revendication 10 ou 11, **caractérisé par le fait que** la cuve de pétrissage (6) est nantie d'un détecteur magnétique de proximité (12), sachant que l'étape opératoire suivante est prévue après l'étape a) :
- interrogation, au moyen du détecteur magnétique de proximité (12), visant à établir si un récipient de transport (7) occupe l'emplacement extrême, les étapes b), c) et d) étant exécutées uniquement lorsqu'un récipient de transport (7) a été détecté audit emplacement extrême.

14. Procédé selon l'une des revendications 10 à 12 précédentes, **caractérisé par le fait que** le récipient de transport (7) est poussé manuellement vers l'emplacement extrême, à l'étape a) ; et **par le fait que** la position dudit récipient de transport (7) est consignée à demeure, au moyen d'un dispositif de verrouillage (10), après que ledit emplacement extrême a été occupé.

15. Utilisation d'une pétrisseuse (1) dévolue à la fabrication de pâtes pour produits alimentaires et comprenant une cuve rotative de pétrissage (6) munie, dans un fond (15), d'un orifice central (16) affecté à l'évacuation de la pâte pour produits alimentaires, et un dispositif central de vidage (14) agencé de façon à occulter l'orifice (16) dans une position de fonctionnement, au moyen d'un corps obturateur mobile (17), et à dégager au moins partiellement ledit orifice (16) dans une position d'évacuation, en vue d'évacuer ladite pâte pour produits alimentaires, **caractérisée par le fait qu'**un dispositif (21) de pulvérisation d'huile, occupant un emplacement sous-jacent à l'orifice (16) et dans la région de ce dernier en vue de dessus, peut être mû au moins partiellement hors de ladite région dudit orifice (16).
